# EUROPEAN PATENT SPECIFICATION

(11) **EP 2 459 649 B1**
(45) Date of publication and mention of the grant of the patent: **24.04.2013**
(21) Application number: 10734497.0
(22) Date of filing: 23.07.2010
(51) Int. Cl.: C08L 83/04

(54) **AN ADHESIVE SILICONE RUBBER COMPOSITION**
KLEBENDE SILIKONKAUTSCHUKZUSAMMENSETZUNG
COMPOSITION ADHÉSIVE DE CAOUTCHOUC DE SILICONE

(30) Priority: 29.07.2009 JP 2009176211
(43) Date of publication of application: 06.06.2012
(73) Proprietor: Wacker Chemie AG, 81737 München (DE)
(72) Inventor: KUWATA, Kotaro, Kanagawa-pref., 211-0053 (JP)
(74) Representative: Mieskes, Klaus Theoderich
(86) International application number: PCT/EP2010/060732
(87) International publication number: WO 2011/012550

(56) References cited:
- EP-A1- 1 510 553
- US-A- 5 744 507

## Description

The present invention relates to an addition curing type silicone composition, and more particularly to an addition curing type composition that can be cured quickly by heating and can become cured materials which show excellent adhesion to thermoset resins, especially to polyurethane, after curing without loss of adhesive strength and change of hardness over times.

The addition type curing composition, which is named for a composition which is curable under platinum catalyst and having major components of an alkenyl group-containing polyorganosiloxane and polyorganohydrogensiloxane, is used for various industrial areas. In recent years, there have been active development works in the area of high value application, such as automobile, electronics/electrics and medical, especially in the application of integrating silicone elastomer and organic resin into one-piece. Thermoplastic resins, such as PBT, polycarbonate, polyamide and so on, have been usually used as organic resins for the integration, and in case of thermoset resins, such as polyurethane, epoxy resin and phenolic novolac resin, adhesion to silicone was not necessarily easy. Especially in case that polyurethane is used together with silicone by the specific feature of polyurethane on abrasive properties and low permeability to water, oil and salt, a complicated pretreatment to silicone rubber as base material, such as plasma treatment, application of primer or UV treatment, was required. In these years, there are various proposals and actual applications on using so called self-adhesive silicone rubber composition, which is the addition curing type silicone rubber composition with adhesive properties, by applying it directly to the surface of base resins without applying treatment such as ozone or primer.

For the self-adhesive silicone rubber composition, there are many proposals having essential feature of formulating alkoxysilanes and condensation catalysts as adhesion promoters. For example, there is a proposal of an adhesive polyorganosiloxane composition formulating epoxy group-containing alkoxysilane as an adhesion promoter to the addition curing type silicone rubber composition (patent reference 1). However, by this method, there arise several problems of insufficient adhesion to thermoset resins, change of hardness over time by the effect of unreacted, at curing stage, alkoxy group of the adhesion promoter, and release from mold.

There are also proposals of silicone compositions which do not require primer for the adhesion to the thermoset resins. One of those is an addition curing type silicone composition having feature of using alkenyl-containing organopolysiloxane of which main siloxane chain is branched by silyl group having functional group of phenolic group, anhydrous group or carboxyl group bonded to silicon atoms (patent reference 2). The composition showed adhesive strength after curing when it was used by pressing the composition to thermoset resin under non-curing stage. However, it is not easy to prepare such polyorganosiloxane which has special functional silyl group in the branch by requiring many steps of reactions, and further improvement in adhesive strength to thermoset resin is required.

An addition curing type silicone composition, which contains an alkylene glycol ester of diacrylic acid or an alkylene glycol ester of dimethacrylic acid as an adhesion promoter to various substrates including thermoset resins and a release agent to mold, is proposed (patent reference 3:). However, further improvement of adhesive strength to thermoset resin is required although the composition can be used to various substrates including thermoset resins.
patent reference 1:Japan laid-open number of JP60-101146
patent reference 2: Japan laid-open number of JP10-330620
patent reference 3: Japan laid-open number of JP2007-500266

From the above, it is an object of the invention to provide an addition curing type composition that can be cured quickly by heating and can become cured materials which show excellent adhesion to thermoset resins without loss of adhesive strength and change of hardness over times.

Based on intensive research aimed at achieving the above object, the inventor of the present invention completed the invention by discovering that the object is achieved by formulating an organosilicon compound having aromatic hydrocarbon group and alkoxy group bonded to silicon atom, an organometal compound which can be catalyst for condensation reaction, and a polyorganosiloxane resin to the addition curing type silicone compound.

Therefore the present invention is:
[1] A silicone rubber composition, which is adhesive to thermoset resins, characterised in comprising of;
   (A) 100 parts by weight of a polyorganosiloxane having at least two of siloxane units represented by general formula (1) and viscosity of 10 to 500,000 mPa.s at 25 °C,

      R¹ₐR²_{b}SiO_{(4-a-b)/2} (1),

      wherein
      R¹ is alkenyl group,
      R² is substituted or unsubstituted monovalent hydrocarbon group which do not have aliphatic unsaturated bond,
      a is 1 or 2,
      b is 0, 1 or 2,
      and the sum of a and b is 1, 2 or 3,
   (B) a polyorganohydrogensiloxane of which siloxane unit is represented by general formula (2) and which has at least two hydrogen atoms bonded to silicon atoms, with the quantity such that the ratio of hydrogen atoms bonded to silicon atoms in component (B) to alkenyl group in component (A) is 0.5 to 7.0,

      R²_{c}H_{d}SiO_{(4-c-d)/2} (2),

      wherein
      R² is substituted or unsubstituted monovalent hydrocarbon group which do not have aliphatic unsaturated bond,
      c is 0, 1, 2 or 3,
      d is 0, 1 or 2,
      and the sum of c and d is 1, 2 or 3,
   (C) 0.01 to 10 parts by weight of an organosilicon compound having aromatic hydrocarbon group and alkoxy group bonded to silicon atom,
   (D) 0.01 to 5 parts by weight of an organometal compound which can be catalyst for condensation reaction of (C) component,
   (E) 10 to 200 parts by weight of a polyorganosiloxane resin, represented by general formula (3) for average siloxane unit, which comprises of 0 to 80 mol% of triorganosiloxane unit, 0 to 60 mol% of diorganosiloxane unit, 0 to 80 mol% of monoorganosiloxane unit and 0 to 60 mol% of SiO_{4/2} unit which does not have organic group, and

      R³ₑSiO_{(4-e)/2} (3),

      wherein
      R³ is identical or different alkyl or alkenyl group of 1 to 12 carbon atoms,
      e is 0.5 to 2.0,
   (F) catalytic amount of hydrosilylation reaction catalyst.
[2] A silicone rubber composition in the above [1], wherein (E) component is characterised in polyorganosiloxane resin containing at least one alkenyl group.
[3] A silicone rubber composition in the above [1] or [2], where in (E) polyorganosiloxane resin is characterised in consisting of triorganosiloxane unit of 10 to 80 mol.% and SiO_{4/2} unit, which does not have organic group, of 20 to 90 mol.%, in all siloxane units.
[4] A silicone rubber composition in one of the above [1] to [3], wherein it is characterised in containing (G) organoalkoxysilane of 0.01 to 20 parts by weight.

The addition curing type silicone composition of the present invention is effective by its quick curing speed, excellent adhesion to various thermoset resins and sustaining adhesive strength and hardness for an extended period of time. The composition of the present invention can be used widely as a self-adhesive silicone rubber, especially by its excellent adhesion to polyurethane or epoxy resin which is thought to be difficult to adhere.

Hereinafter, the present invention will be described in detail.

(A) component of the polyorganosiloxane used in the present invention has at least two alkenyl groups bonded to silicon atoms in one molecule. This polyorganosiloxane comprises of at least two siloxane units represented in aforementioned formula (1) and further polysiloxane units represented by general formula (4).

R²_{f}SiO_{(4-f)/2} (4)

In general formula (4),
R² is same with those in general formula (1),
and f is integer number of 1 to 3.

The polyorganosiloxane may be linear or branched, or mixture of those. This polyorganosiloxane may be produced by a method known to the state of the art. The polyorganosiloxane is preferably linear because the preparation of the polyorganosiloxane is easy, it has high fluidity and elastic silicone rubber is obtained.

Alkenyl group R¹ in the above general formula (1) has carbon number of 2 to 6, and examples include vinyl, allyl, 1-butenyl and 1-hexenyl. Vinyl group is preferable from economical reasons and easiness of production.

R² in the general formula (1) and (4) is substituted or unsubstituted monovalent hydrocarbon having carbon number of 1 to 12. Examples include alkyl group such as methyl, ethyl, propyl, butyl, hexyl and dodecyl; aryl group such as phenyl; substituted hydrocarbon group such as chloromethyl and 3,3,3-trifluoropropyl. The methyl group is the most preferable among the above examples as it is economical and easy to produce, and the viscosity of the polyorganosiloxane is low while it has enough polymerisation number to maintain good physical properties after curing. Optionally other hydrocarbon can be selected, such as phenyl group in case that the cured materials require resistance to cold or specific optical properties, and 3,3,3-trifuluorpropyl group in case that the cured materials require oil resistance.

Further, the alkenyl-containing units represented by the above general formula for (A) component, which is a base polymer for the addition curing polyorganosiloxane, may be at the terminal or in the middle of the polymer chain. It is preferable that at least one terminal end of alkenyl exists to achieve good mechanical properties after curing.

Any limitation is not imposed to viscosity of (A) component, however, it is preferable that the viscosity of (A) component is in the range of 10 to 500,000 mPa.s at 25 °C. The viscosity of 100 to 250,000 mPa.s is further preferable especially for a usage which requires higher fluidity of the composition before curing and excellent mechanical properties after curing.

(B) component of polyorganohydrogensiloxane in the present invention is a necessary component to cure the composition to elastomer or gel-like materials by the addition reaction with the alkenyl group in (A) component. There is no limitation on the molecular structure, such as linear, cyclic or branched, of (B) component as far as it contains more than two of Si-H bond in one molecule. From the easiness of the production, preferable structure is linear polyorganohydrogensiloxane or branched polyorganohydrogensiloxane comprising of R²₂2HSiO_{1/2} unit and SiO₂ unit.

Examples of R² in the aforementioned general formula (2) is same with those exemplified for the formula (1). R² of the formula (2) is identical or different in the component (B) and may be same or different from those of the formula (1). R² of the formula (2) is preferably methyl and/or phenyl for heat resistance and adhesion to base materials. The most preferable (B) component is a polymethylhydrogensiloxane having (CH₃)HSiO_{2/2} unit and (CH₃)₂SIO_{2/2} unit, and a polymethylphenylhydrogensiloxane having (CH₃)HSiO_{2/2} unit, (CH₃)₂SIO_{2/2} and (CH₃) (C₆H₅)SiO_{2/2} unit. Those polyorganohydrogensiloxane may be produced by a known method to the state of the art.

(B) component in the composition is used by the amount of (B) to make the ratio of hydrogen atom bonded to silicon atom to alkenyl group of R¹ in the component (A) 0.5 to 7.0, preferably 0.7 to 5.0, further preferably 0.8 to 3.0. At less than 0.5, curing of the composition is not enough, and at more than 7.0, it tends to foam at curing, and observe lower adhesion and change of mechanical properties, especially heat resistance.

The organosilicon compound of (C) component in the present invention is used for promoting excellent self-adhesion to the composition together with (D) component of organometal compound. The organosilicon compound has at least one aromatic hydrocarbon group in the molecule and alkoxy group bonded to silicon atom. Optionally, within the spirit and the concept of the present invention, the silicon compound of (C) component may have halogen group such as chlorine radical or bromine radical, and functional group such as amino, amid, mercapto, sulfide, cyano, carbonyl, carboxyl, hydroxyl, epoxy, hydrogen bonded to silicon atom, methacryl, acryl, and ether bonded oxygen.

(C) component of the present invention preferably contains at least one aromatic group represented in general formula (5) to (8);

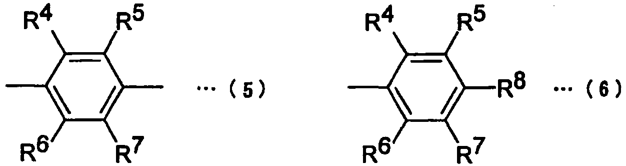

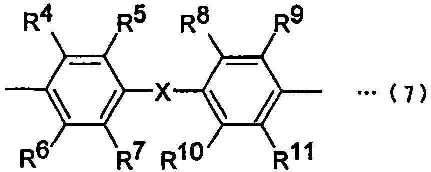

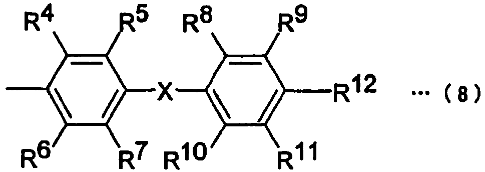

In the formula (5) to (8), R⁴ to R¹² is identical or different monovalent group selected from hydrogen atom, halogen atom, hydroxyl, alkoxy or hydrocarbon having carbon number of 1 to 8 which is unsubstituted or substituted by halogen atom or cyano group. X may not be contained in the formula or may be divalent group selected from below illustrative examples; 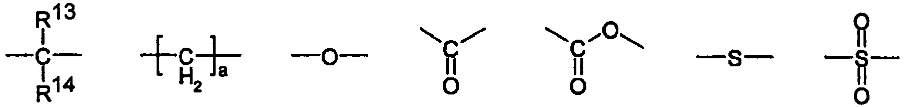 R¹³ and R¹⁴ are identical or different group selected from hydrogen, halogen atom, hydroxyl, monovalent hydrocarbon group having carbon number of 1 to 8 which is unsubstituted or substituted by halogen or cyano group, or cyclic group of carbocyclic or heterocyclic by bonding R¹³ and R¹⁴, and a is integer number of 2 to 8.)

Examples of such organosilicon compounds are illustrated below. In the illustrative examples, compounds which do not contain alkenyl group are preferable to achieve the object of the present invention, although the compounds which contain alkenyl group are within this invention. In the illustrative examples, Me is methyl, Et is ethyl, Pr is propyl and n is integer number of 1 to 20.

PhSi(OEt)₃

Ph₂Si(OMe)₂

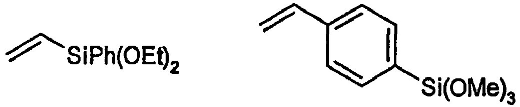

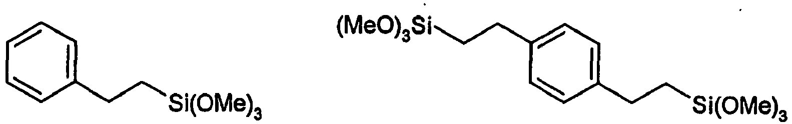

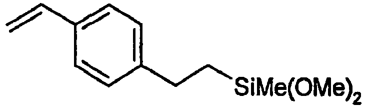

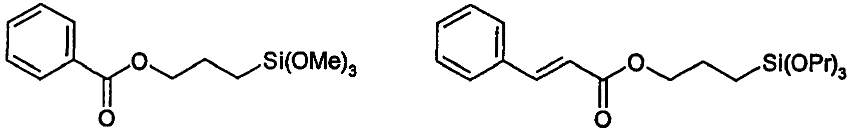

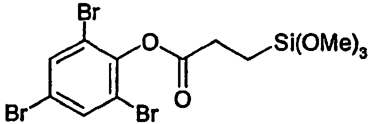

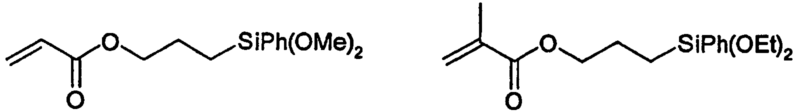

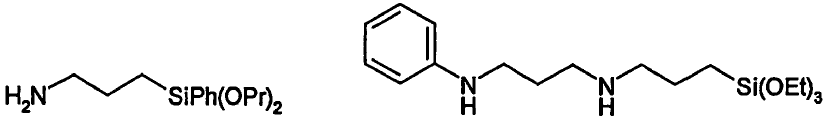

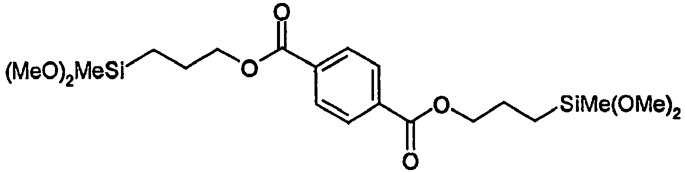

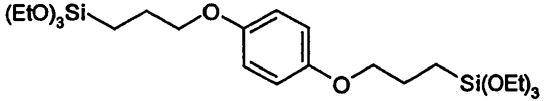

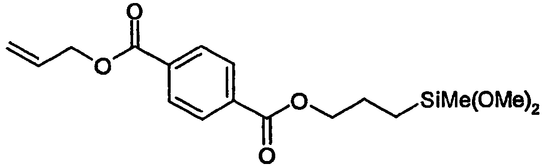

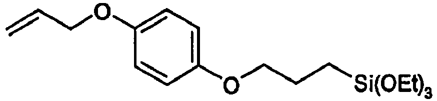

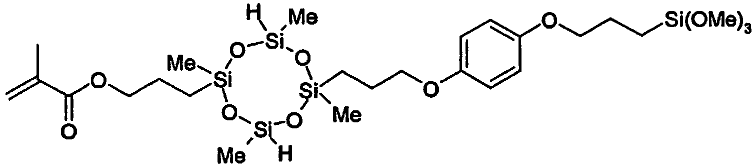

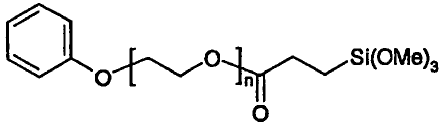

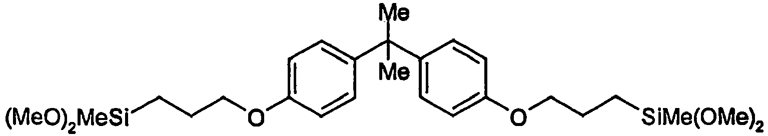

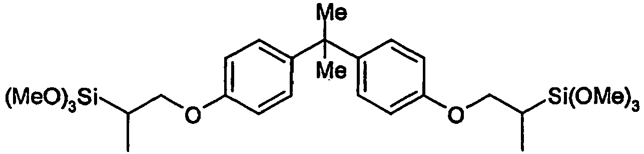

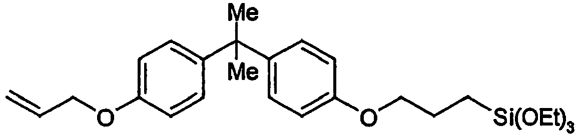

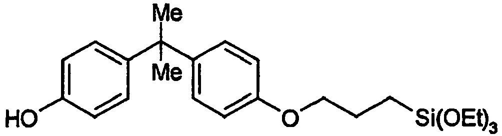

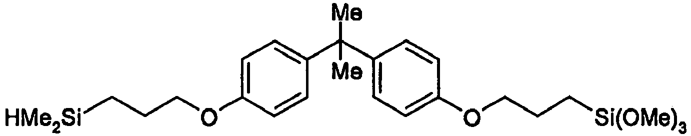

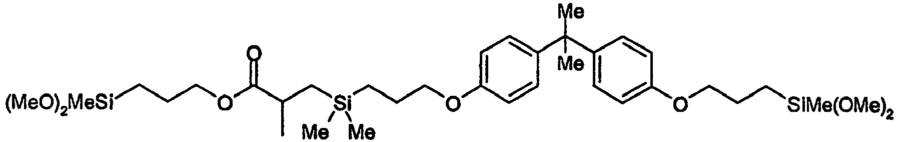

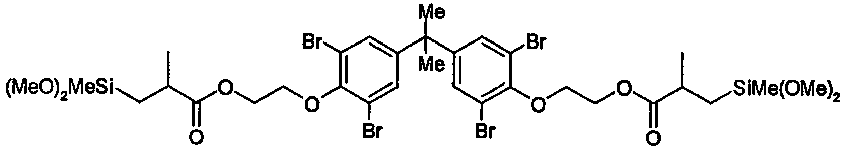

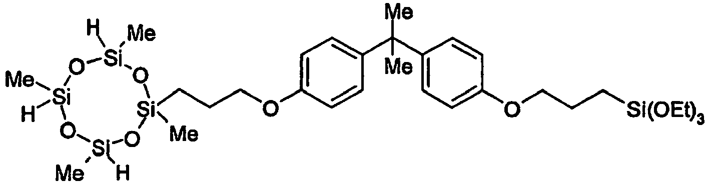

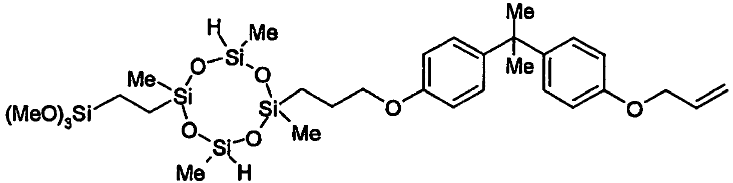

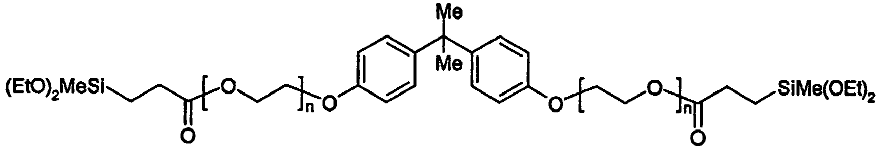

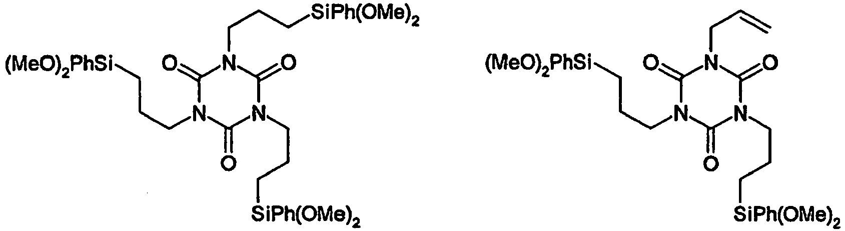

For (C) component of the present invention, the most preferable example is shown in below general formula (9). In the formula (9), R¹⁵ to R¹⁸ is identical or different, substituted or unsubstituted saturated monovalent aliphatic hydrocarbon group having carbon number of 1 to 8, or, substituted or unsubstituted monovalent aromatic hydrocarbon group having carbon number of 6 to 18, p is 1, 2 or 3, q is 0, 1 or 2 and p+q is 3.

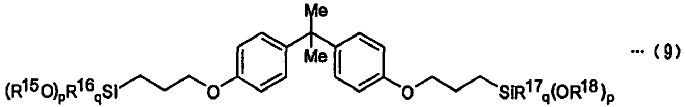

The organosilicon compounds of (C) component, which are useful to promote adhesive properties of the silicone composition in the present invention, may be used independently, or more than two of those may be used to achieve better adhesion to the substrates. The quantity of the organosilicon compounds is 0.1 to 10 parts by weight, preferably 0.2 to 2 parts by weight to 100 parts by weight of (A) component. Adhesive strength is not enough at less than 0.1 parts by weight, and at more than 10 parts by weight the physical properties of elastomer after curing of the compound is deteriorated.

The organosilicon compounds may be prepared by using information on method of synthesis, procedure of synthesis, properties and method of handling described in following references;

Reference 1: JIKKEN KAGAKU KOUZA (Experimental Chemistry Course) Version 4, Volume 24 "Organic synthesis VI, typical metal compounds", published by Maruzen Co. (1992), edited by Japan Chemical Society.

Reference 2: JIKKEN KAGAKU KOUZA (Experimental Chemistry Course) Version 4, Volume 25 "Organic synthesis VII, Synthesis by organometal reagent", published by Maruzen Co. (1992), edited by Japan Chemical Society.

Typical examples of the synthesis are, for example; (1) alkoxy reaction between alcohol and silane which is alkylated by Grignard agent after hydrosilylation of commercial alkenyl compound by chlorosilane having Si-H, (2) alkoxy reaction by alcohol to silane which is a hydrosilylation reaction product of commercial alkenyl compound by chlorosilane having Si-H, (3) hydrosilylation of commercial alkenyl compound by alkoxysilane having Si-H.

The organometal compound of (D) component in the present invention is used to promote adhesion of the composition together with the organosilicon compound of (C) component and to minimize the change of hardness after curing over time. Examples of the preferred organometal compounds include metal alkoxide such as methoxide, ethoxide or propoxide of metals such as B, Al, Ti, V, Cr, Mn, Fe, Co, Ni, Cu, Zn, Zr, Mo, Ru, Rh, Pd, Ag, Cd, Sn, Os, Ir, Hg and rare-earth; metal salt of fatty acid such as metal stearate and metal octylate; metal chelate such as metal acetylacetonate; metal octyleneglycolat and metal ethylacetoacetate. From the availability of the compound and effect on reactivity and adhesion promotion, preferred examples include metal alkoxide, metal salt of fatty acid and metal chelate from B, Al, Ti or Zr. Particularly preferred examples are tetra(n-butoxy)zirconium, tetrapropoxyzirconium, zirconiumtetraacetylacetonate, tetra(n-butoxy)titan, diisopropoxytitan-bis(acetylacetonate), alminiumtris(ethylacetoacetate), aluminiumtris(acetylacetonate) and boron isopropoxide. The alcohol component for the alkoxides may be commodity type alcohol such as isopropanol or butanol from availability. Or, high molecular weight alcohol derived from natural product or synthesis may be used from the consideration on the storage stability of the addition curing type silicone.

The compound of (D) component may be used independently, or more than two of those may be used to achieve better adhesion to thermoset resin. The quantity of the organometal compounds is 0.01 to 5 parts by weight, preferably 00.2 to 2 parts by weight. At less than 0.01 parts by weight, enough adhesive strength is not obtained as the effect of the compound as condensation catalyst is not enough, and at more than 5 parts by weight, the physical properties or heat resistance of elastomer after curing of the compound is deteriorated.

The polyorganosiloxane resin of (E) component in the present invention is one of indispensable components, of which purpose is not limited to promote adhesion to various thermoset resins for the addition type curing silicone composition derived in the present invention, also to improve mechanical strength of base polymer. The polyorganosiloxane resin of (E) component comprises of triorganosiloxane unit (M unit) of 0 to 80 mol %, diorganosiloxane unit (D unit) of 0 to 60 mol %, monoorganosiloxane unit (T unit) of 0 to 80 mol % and SiO_{4/2} unit (Q unit), which does not have organic group, of 0 to 60 mol %. Average unit composition of those units is represented by the general formula (3) R³ₑSiO(_{4-e)/2}, wherein e, which indicates the average of the composition in the general formula (3), is 0.5 to 2.0. Preferably, the polyorganosiloxane resin is a resin consisted of M and Q unit with triorganosiloxane unit of 10 to 80 mol % and SiO_{4/2} unit (Q unit) of 20 to 90 mol % in total of siloxane units. The polyorganosiloxane can be produced by the known method of hydrolysis and condensation reaction of relevant chlorosilanes or alkoxysilanes, which is known to state of the art.

R³ in the general formula (3) for (E) component in the present invention is identical of different alkyl group or alkenyl group having carbon number of 1 to 12, and the alkyl group are exemplified same with aforementioned R² and the alkenyl group are exemplified same with aforementioned R¹. (E) component of the present invention preferably contains at least one alkenyl group in the molecule. It is because improvement of adhesive properties is achieved together with the mechanical strength of base polymer by incorporating the alkenyl group to the matrix of the base polymer through the addition reaction.

The quantity of the polyorganosiloxane resin is 10 to 200 parts by weight to 100 parts by weight of (A) component, preferably 20 to 100 parts by weight. At less than 10 parts by weight enough adhesive strength and mechanical properties are not obtained, and at more than 200 parts by weight the physical properties or elastomer after curing of the compound is deteriorated.

The hydrosilylation catalyst of component (F) in the present invention is used as a catalyst for the addition reaction, called as hydrosilylation reaction, between the alkenyl group R1 of the (A) polyorganosiloxane and the hydrogen atom bonded to silicon atom of the (B) polyorganohydrogensiloxane. The hydrosilylation reaction catalyst is a metal such as platinum, rhodium, palladium, ruthenium, and iridium, and those compounds. Among those hydrosilylation catalysts, the most preferred is platinum or platinum compound.

Examples of suitable platinum compounds include platinum black, platinum halides(such as PtCl₄, H₂PtCl₄·6H₂O, Na₂PtCl₄·4H₂O, and reaction products of H₂PtCl₄·6H₂O and cyclohexane), platinum-olefin complexes, platinum-alcohol complexes, platinum-alcoholate complexes, platinum-ether complexes, platinum-aldehyde complexes, platinum-ketone complexes, platinum-vinylsiloxane complexes (such as platinum-1,3-divinyl-1,1,3,3-tetramethyldisiloxane complex), bis-(γ-picoline)-platinumdichloride, trimethylenedipyridine-platinumdichloride, dicyclopentadiene-platinumdichloride, cyclooctadiene-platinumdichloride, cyclopentadiene-platinum dichloride, bis(alkynyl)bis(triphenylphosphine)-platinum complex, and bis(alkynyl)(cyclooctadiene)-platinum complex.

The hydrosilylation reaction catalyst may also be used in a microcapsulated form. Example of the microcapsules is ultra fine particles of a thermoplastic resin (such as a polyester resin or a silicone resin) which contains the catalyst and is insoluble in the organopolysiloxane. Furthermore, the hydrosilylation reaction catalyst may also be used in the form of a clathrate compound, for example, the catalyst enclosed within cyclodextrine. The hydrosilylation reaction catalyst is used in an effective quantity, so-called catalytic quantity. A typical quantity, expressed as a metal equivalent value, is within a range of 0.1 to 1000 ppm relative to the component (A), and quantities from 0.5 to 200 ppm are preferred.

The organoalkoxysilane of (G) component in the present invention may be used to further improve adhesion to thermoset resins. Examples of the silane are vinyltrimethoxysilane, vinyltriethoxysilane, vinyltris(β-methoxyethoxy)silane, vinyldiethoxymethylsilane, allyltrimethoxysilane, acryloyloxymethyltrimethoxysilane, γ-methacryloyloxypropyltrimethoxysilane, γ-glycidyloxypropyltrimethoxysilane, γ-aminopropyltrimethoxysilane, γ-aminopropyltriethoxysilane, N-(β-aminoethyl)-γ-aminopropyltrimethoxysilane, γ-mercaptopropyltrimethoxysilane, α-(ethoxycarbonyl)ethyltrimethoxysilane. Particularly preferred is γ-methacryloyloxypropyltrimethoxysilane and γ-glycidyloxypropyltrimethoxysilane. Those may be used independently, or more than two of those may be used. The quantity of the organoalkoxysilane is 0.01 to 20 parts by weight to 100 parts by weight of (A) component, preferably 0.05 to 20 parts by weight. At less than 0.01 parts by weight, it is difficult to obtain the effect of the alkoxysilane, and use of more than 20 parts by weight is not preferable because release of cured materials from mold is deteriorated and the change of hardness is observed after curing.

In addition to the above (A) to (G) component, the composition may contain various inorganic or organic fillers to improve the physical properties of the composition. The examples of the fillers are fumed silica, precipitated silica, pulverized silica, diatomaceous earth, iron oxide, zinc oxide, titan oxide, calcium carbonate and carbon black. The quantity of the fillers is optional in the range that the purpose of the present invention is not impaired. Further, the composition may contain known inhibitors such as acetylene alcohols, vinyl-containing polyorganosiloxane, triallylisocyanurate, acetylene-containing silane or siloxane. The composition of the present invention may be diluted by organic solvent as specific applications require.

The adhesive composition of the present invention is obtained by mixing the above (A) to (F) component and the optional components. Preferably the composition is obtained by mixing (A) component and the optional component such as fillers at 100 to 200 °C for 1 to 4 hours using planetary mixer or kneader and then mixing the (B), (C), (D), (E) and (F) component at room temperature. Molding method may be selected according to the viscosity of the mixture, and any method such as casting, compression, injection, extrusion and transfer molding may be selected. Curing conditions are usually 60 to 200 °C and for 10 second to 24 hours.

The adhesive silicone rubber composition of the present invention is suitable to obtain integral mold with the organic resins. The examples of the thermoset resins are polyurethane, phenolic resin, epoxy resin, urea resin, unsaturated polyester resin, melamine resin, alkyd resin and thermoset polyimide.

The method of integral molding for the uncured silicone rubber composition onto the above thermoset resin is exemplified by heating, at the temperature of the curing, the uncured silicone rubber composition which has desired shape and is placed onto the molded thermoset resin; pressing the uncured silicone rubber composition onto the thermoset resin at the temperature lower than the curing; and injection molding the thermoset resin to the mold followed by injecting the silicone rubber composition.

The addition curing type silicone rubber composition may be liquid state, putty like or paste, however, it is preferable to be liquid or paste from easiness of molding. The curing conditions of the addition curing type silicone rubber composition should be, for strong adhesion to the thermoset resin, at the temperature and time which do not cause change of shape or quality. The conditions vary by the type of the resin, but the integral mold can be obtained by the conditions of the temperature of 80 to 180 °C and the time of 0.2 to 30 minutes.

The addition curing type silicone rubber composition of the present invention can be used as coating agent to the surface of the thermoset resins. Depending on the method of the coating, diluting agent may be added to adjust viscosity. There are no limitations on the diluting agent, and various organic solvent such as toluene, xylene, n-hexane, ethanol and isopropanol can be used. There are also no limitations on the method of the coating, and it is preferable to apply screen printing, spray coating or dip-coating. The coated film can be obtained by drying at 50 to 200 °C and 5 minutes to 3 hours after coating to the thermoset resins.

The adhesive silicone rubber composition of the present invention cures quickly at relatively low temperature and achieves adhesion to various thermoset resins without change of adhesive strength and hardness over time. Particularly, the composition adheres well to polyurethane which was considered difficult to adhere. The composition can be used, for example, for key-pad of mobile phone which requires durability to repeated load to joint area between resin and rubber for a long term use.

### EXAMPLES

The present invention is illustrated below by examples and comparative examples although it is not limited to the examples. All parts are by weight.

### [Method of delamination test]

The delamination test and shape of sample pieces composed by silicone rubber and resin sheet are performed according to JIS K6256-2(Adhesion test for cured rubber or thermoplastic rubber, section 6. "90 degree delamination test for solid plate and cured rubber") in the examples and the comparative examples.

### [Example 1]

A kneader was charged with 100 parts of polydimethylsiloxane((A) component) terminated by a dimethylvinylsilyl radical at each end and having a viscosity of 20,000 mPa.s at 25 °C, 40 parts of fumed silica having a specific surface area of 200 m2/g, 8 parts of hexamethyldisilazane, and 1 part of ion-exchanged water. The ingredients were mixed by agitation for one hour at room temperature, followed by heating to 150 °C and then mixing for further 2 hours under heating. Thereafter, the mixture was cooled down to room temperature followed by adding 3.1 parts of polymethylhydrogensiloxane((B) component)) composed by (CH₃)HSiO_{2/2} and (CH₃)₂SiO_{2/2} with ratio of 67/33 having a viscosity of 20 mPa.s, 20 parts of polymethylsiloxane resin((E) component, herein after RESIN 1) composed by 58 mol.% of (CH₃)₃SiO_{1/2}, 2 mol.% of (CH₂=CH) (CH₃)₂SiO_{1/2} and 40 mol.% of SiO_{4/2}, 0.8 parts of acetylene alcohol which extended the time for start of curing at room temperature, and 0.3 parts of platinum-vinylsiloxane complex solution having platinum content of 0.5 weight percentile, and then mixed further. And then, the silicone rubber composition was prepared by adding 0.5 parts of organosilicon compound((C) component of the present invention) which is illustrated by below formula (i) and 0.1 parts of zirconiumtetraacetylacetonate (ORGATICS ZC-150 manufactured by Matsumoto Fine Chemical Co.) to the above mixture.

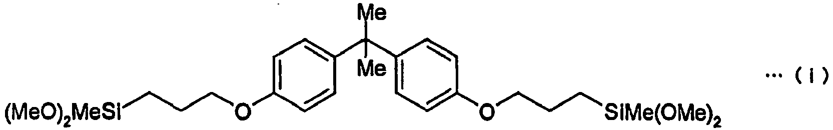

Sample pieces for delamination test were prepared by filling the above silicone rubber composition to mold which has three cavities with length of 125 mm, width of 90 mm and thickness of 6.0 mm, and to which polyurethane sheets (PANDEX 4030 manufactured by DIC Co.) of 60 mm length, 25 mm width and 2 mm thickness were placed, and then curing at 120 °C for 10 minutes by compression cure. The delamination test was performed at room temperature and speed of 50 mm/min with autograph detection. Table 1 shows delamination strength and observation of peeled surface (ratio of cohesive failure (%)). The table 1 also shows test result of using phenolic resin (AV LITE 811 manufactured by Asahi Organic Chemical Industry Co., Ltd.) or epoxy resin (AER-260 manufactured by Asahikasei Epoxy Co.) instead of polyurethane resin and result of 90 degree delamination test and hardness by Type A Durometer for the samples of 24 hours and one month after preparation.

### [Comparative Example 1]

By the same method described in Example 1 except that the organosilicon compound (i) ((C) component) and zirconiumtetraacetylacetonate ((D) component) were not used, silicone rubber composition was prepared, and sample sheets to polyurethane resin, phenolic resin and epoxy resin were made. Table 2 shows result of 90 degree delamination test and hardness by Type A Durometer for the samples of 24 hours and one month after preparation of the samples.

### [Comparative Example 2]

By the same method described in Example 1 except that (E) component was not used, silicone rubber composition was prepared, and sample sheets to polyurethane resin, phenolic resin and epoxy resin were made. Table 2 shows result of 90 degree delamination test and hardness by Type A Durometer for the samples of 24 hours and one month after preparation of the samples.

### [Comparative Example 3]

By the same method described in Example 1 except that γ-glycidyloxypropyltrimethoxysilane was used instead of the organosilicon compound (i) ((C) component) and zirconiumtetraacetylacetonate ((D) component), silicone rubber composition was prepared, and sample sheets to polyurethane resin, phenolic resin and epoxy resin were made. Table 2 shows result of 90 degree delamination test and hardness by Type A Durometer for the samples of 24 hours and one month after preparation of the samples.

### [Example 2]

By the same method described in Example 1 except that diisopropoxytitanbis(ethylacetoacetate) (ORGATICS TC-750 manufactured by Matsumoto Fine Chemical Co.) was used instead of zirconiumtetraacetylacetonate ((D) component), silicone rubber composition was prepared, and sample sheets to polyurethane resin, phenolic resin and epoxy resin were made. Table 1 shows result of 90 degree delamination test and hardness by Type A Durometer for the samples of 24 hours and one month after preparation of the samples.

### [Example 3]

By the same method described in Example 1 except that polymethylsiloxane resin ((E) component, herein after RESIN 2) composed by 15 mol.% of (CH₃)₃SiO_{1/2}, 20 mol.% of (CH₃)₂SiO_{2/2}, 25 mol.% of CH₃SiO_{3/2} and 40 mol.% of SiO_{4/2} was used instead of RESIN 1, silicone rubber composition was prepared, and sample sheets to polyurethane resin, phenolic resin and epoxy resin were made. Table 1 shows result of 90 degree delamination test and hardness by Type A Durometer for the samples of 24 hours and one month after preparation of the samples.

### [Example 4]

By the same method described in Example 1 except that 0.5 parts of γ-glycidyloxypropyltrimethoxyxilane (SILA-ACE S 510 manufactured by Chisso Corporation) was further added, silicone rubber composition was prepared, and sample sheets to polyurethane resin, phenolic resin and epoxy resin were made. Table 1 shows result of 90 degree delamination test and hardness by Type A Durometer for the samples of 24 hours and one month after preparation of the samples.

### [Example 5]

By the same method described in Example 4 except that methacryloxypropyltrimethoxysilane (SILA-ACE S 710 manufactured by Chisso Corporation) was used instead of γ-glycidyloxypropyltrimethoxyxilane, silicone rubber composition was prepared, and sample sheets to polyurethane resin, phenolic resin and epoxy resin were made. Table 1 shows result of 90 degree delamination test and hardness by Type A Durometer for the samples of 24 hours and one month after preparation of the samples.

### [Comparative Example 4]

By the same method described in Example 4 except that (E) component was not added, silicone rubber composition was prepared, and sample sheets to polyurethane resin, phenolic resin and epoxy resin were made. Table 2 shows result of 90 degree delamination test and hardness by Type A Durometer for the samples of 24 hours and one month after preparation of the samples.

### [Comparative Example 5]

By the same method described in Example 4 except that 0.5 parts of organic compound represented by formula (ii) was used instead of organosilicon compound represented by formula (i) of (C) component, silicone rubber composition was prepared, and sample sheets to polyurethane resin, phenolic resin and epoxy resin were made. Table 2 shows result of 90 degree delamination test and hardness by Type A Durometer for the samples of 24 hours and one month after preparation of the samples.

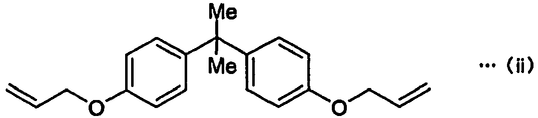

### [Comparative Example 6]

By the same method described in Example 4 except that 0.5 parts of organosilicon compound represented by formula (iii) which did not have aromatic group was used instead of organosilicon compound represented by formula (i) of (C) component, silicone rubber composition was prepared, and sample sheets to polyurethane resin, phenolic resin and epoxy resin were made. Table 2 shows result of 90 degree delamination test and hardness by Type A Durometer for the samples of 24 hours and one month after preparation of the samples.

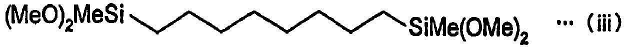

**Table 1**

| Example No | | | | 1 | 2 | 3 | 4 | 5 |
|---|---|---|---|---|---|---|---|---|
| (C) Component | Organosilicon compound (i) | | | 0.5 | 0.5 | 0.5 | 0.5 | 0.5 |
| | Organic compound (ii) | | | | | | | |
| | Organosilicon compound (iii) | | | | | | | |
| (D) Component | Zirconiumtetraacetylacetonate | | | 0.1 | | 0.1 | 0.1 | 0.1 |
| | Diisopropoxytitanbis(ethylacetoacetate) | | | | 0.2 | | | |
| (E) Component | RESIN 1 | | | 20 | 20 | | 20 | 20 |
| | RESIN 2 | | | | | 20 | | |
| (F) Component | γ-glycidyloxypropyltrimethoxysilane | | | | | | 0.5 | |
| | Methacryloxypropyltrimethoxysilane | | | | | | | 0.5 |

| Delamination Test | | | | | | | | |
|---|---|---|---|---|---|---|---|---|
| Organic resin | Time | Items | Unit | | | | | |
| Polyurethane | 24 hours | Hardness | | 50 | 51 | 51 | 53 | 53 |
| | | Adhesive strength | (N/mm) | 18 | 24 | 19 | 22 | 25 |
| | | Ratio of co-hesive fracture | (%) | 100 | 100 | 95 | 100 | 100 |
| | 1 month | Hardness | | 50 | 51 | 51 | 53 | 53 |
| | | Adhesive strength | (N/mm) | 19 | 24 | 20 | 24 | 26 |
| | | Retention of adhesive strength | (%) | 105.6 | 100.0 | 105.3 | 109.1 | 104.0 |
| | | Ratio of co-hesive fracture | (%) | 100 | 100 | 95 | 100 | 100 |
| Phenolic resin | 24 hours | Adhesive strength | (N/mm) | 16 | 21 | 17 | 20 | 20 |
| | | Ratio of co-hesive fracture | (%) | 95 | 100 | 90 | 100 | 100 |
| | 1 month | Adhesive strength | (N/mm) | 17 | 21 | 18 | 22 | 21 |
| | | Retention of adhesive strength | (%) | 106.3 | 100.0 | 105.9 | 110.0 | 105.0 |
| | | Ratio of co-hesive fracture | (%) | 100 | 100 | 95 | 100 | 100 |
| Epoxy resin | 24 hours | Adhesive strength | (N/mm) | 19 | 26 | 21 | 23 | 26 |
| | | Ratio of co-hesive fracture | (%) | 100 | 100 | 100 | 100 | 100 |
| | 1 month | Adhesive strength | (N/mm) | 21 | 27 | 21 | 24 | 27 |
| | | Retention of adhesive strength | (%) | 110.5 | 103.8 | 100.0 | 104.3 | 103.8 |
| | | Ratio of co-hesive fracture | (%) | 100 | 100 | 95 | 100 | 100 |

**Table 2**

| Comparative example No | | | | 1 | 2 | 3 | 4 | 5 | 6 |
|---|---|---|---|---|---|---|---|---|---|
| (C) Component | Organosilicon compound (i) | | | | 0.5 | | 0.5 | | |
| | Organic compound (ii) | | | | | | | 0.5 | |
| | Organosilicon compound (iii) | | | | | | | | 0.5 |
| (D) Component | Zirconiumtetraacetylacetonate | | | | 0.1 | | 0.1 | 0.1 | 0.1 |
| | Diisopropoxytitanbis(ethylacetoacetate) | | | | | | | | |
| (E) Component | RESIN 1 | | | 20 | | 20 | | 20 | 20 |
| | RESIN 2 | | | | | | | | |
| (F) Component | γ-glycidyloxypropyltrimethoxysilane | | | | | 0.5 | 0.5 | 0.5 | 0.5 |
| | Methacryloxypropyltrimethoxysilane | | | | | | | | |

| Delamination Test | | | | | | | | | |
|---|---|---|---|---|---|---|---|---|---|
| Organic resin | Time | Items | Unit | | | | | | |
| Polyurethane | 24 hours | Hardness | | 45 | 48 | 51 | 48 | 47 | 48 |
| | | Adhesive strength | (N/mm) | <1 | 3 | 8 | <1 | 4 | <1 |
| | | Ratio of co-hesive fracture | (%) | 0 | 5 | 25 | 0 | 5 | 0 |
| | 1 month | Hardness | | 45 | 48 | 55 | 48 | 47 | 48 |
| | | Adhesive strength | (N/mm) | <1 | 2 | 4 | <1 | 3 | <1 |
| | | Retention of adhesive strength | (%) | - | 66.7 | 50.0 | - | 75.0 | - |
| | | Ratio of co-hesive fracture | (%) | 0 | 0 | 10 | 0 | 0 | 0 |
| Phenolic resin | 24 hours | Adhesive strength | (N/mm) | <1 | 2 | <1 | <1 | 2 | <1 |
| | | Ratio of co-hesive fracture | (%) | 0 | 5 | 0 | 0 | 0 | 0 |
| | 1 month | Adhesive strength | (N/mm) | <1 | <1 | <1 | <1 | <1 | <1 |
| | | Retention of adhesive strength | (%) | - | - | - | - | - | - |
| | | Ratio of co-hesive fracture | (%) | 0 | 0 | 0 | 0 | 0 | 0 |
| Epoxy resin | 24 hours | Adhesive strength | (N/mm) | <1 | 3 | <1 | <1 | 3 | <1 |
| | | Ratio of co-hesive fracture | (%) | 0 | 5 | 0 | 0 | 5 | 0 |
| | 1 month | Adhesive strength | (N/mm) | <1 | <1 | <1 | <1 | <1 | <1 |
| | | Retention of adhesive strength | (%) | - | - | - | - | - | - |
| | | Ratio of co-hesive fracture | (%) | 0 | 0 | 0 | 0 | 0 | 0 |

## Claims

1. A silicone rubber composition, which is adhesive to thermoset resins, **characterized in** comprising of;
(A) 100 parts by weight of a polyorganosiloxane having at least two of siloxane units represented by general formula (1) and viscosity of 10 to 500,000 mPa.s at 25 °C,
R¹R²_{b}SiO_{(4-a-b)/2} (1),
wherein
R¹ is alkenyl group,
R² is substituted or unsubstituted monovalent hydrocarbon group which do not have aliphatic unsaturated bond,
a is 1 or 2,
b is 0, 1 or 2,
and the sum of a and b is 1, 2 or 3,
(B) a polyorganohydrogensiloxane of which siloxane unit is represented by general formula (2) and which has at least two hydrogen atoms bonded to silicon atoms, with the quantity such that the ratio of hydrogen atoms bonded to silicon atoms in component (B) to alkenyl group in component (A) is 0.5 to 7.0,
R²_{c}H_{d}SiO_{(4-c-d)/2} (2),
wherein
R² is substituted or unsubstituted monovalent hydrocarbon group which do not have aliphatic unsaturated bond,
c is 0, 1, 2 or 3,
d is 0, 1 or 2,
and the sum of c and d is 1, 2 or 3,
(C) 0.01 to 10 parts by weight of an organosilicon compound having aromatic hydrocarbon group and alkoxy group bonded to silicon atom,
(D) 0.01 to 5 parts by weight of an organometal compound which can be catalyst for condensation reaction of (C) component,
(E) 10 to 200 parts by weight of a polyorganosiloxane resin, represented by general formula (3) for average siloxane unit, which comprises of 0 to 80 mol% of triorganosiloxane unit, 0 to 60 mol% of diorganosiloxane unit, 0 to 80 mol% of monoorganosiloxane unit and 0 to 60 mol% of SiO4/2 unit which does not have organic group, and
R³ₑSiO_{(4-e)/2}, (3)
wherein
R³ is identical or different alkyl or alkenyl group of 1 to 12 carbon atoms,
e is 0.5 to 2.0,
(F) catalytic amount of hydrosilylation reaction catalyst.

2. A silicone rubber composition in Claim 1, wherein (E) component is **characterized in** polyorganosiloxane resin containing at least one alkenyl group.

3. A silicone rubber composition in Claim 1 or 2, wherein (E) polyorganosiloxane resin is **characterized in** consisting of triorganosiloxane unit of 10 to 80 mol.% and SiO_{4/2} unit, which does not have organic group, of 20 to 90 mol.%, in all siloxane units.

4. A silicone rubber composition in one of Claim 1 to 3, wherein it is **characterised in** containing (G) organoalkoxysilane of 0.01 to 20 parts by weight.

## Patentansprüche

1. Silikonkautschukzusammensetzung, die auf Duroplastharzen haftet, **dadurch gekennzeichnet, dass** sie aus
(A) 100 Gewichtsteilen eines Polyorganosiloxans mit mindestens zwei Siloxaneinheiten der allgemeinen Formel (1) und einer Viskosität von 10 bis 500.000 mPa.s bei 25°C,
R¹ₐR²_{b}SiO_{(4-a-b)/2} (1)
worin
R¹ für eine Alkenylgruppe steht,
R² für eine substituierte oder unsubstituierte einwertige Kohlenwasserstoffgruppe, die keine aliphatische ungesättigte Bindung aufweist, steht,
a für 1 oder 2 steht,
b für 0, 1 oder 2 steht
und die Summe von a und b gleich 1, 2 oder 3 ist,
(B) einem Polyorganohydrogensiloxan, dessen Siloxaneinheit durch die allgemeine Formel (2) wiedergegeben wird und das mindestens zwei siliciumgebundene Wasserstoffatome aufweist, wobei die Menge so beschaffen ist, dass das Verhältnis von siliciumgebundenen Wasserstoffatomen in Komponente (B) zu Alkenylgruppen in Komponente (A) 0,5 bis 7,0 beträgt,
R²_{c}H_{d}SiO_{(4-c-d)/2} (2)
worin
R² für eine substituierte oder unsubstituierte einwertige Kohlenwasserstoffgruppe, die keine aliphatische ungesättigte Bindung aufweist, steht,
c für 0, 1, 2 oder 3 steht,
d für 0, 1 oder 2 steht
und die Summe von c und d gleich 1, 2 oder 3 ist,
(C) 0,01 bis 10 Gewichtsteilen einer Organosiliciumverbindung mit aromatischer Kohlenwasserstoffgruppe und siliciumgebundener Alkoxygruppe,
(D) 0,01 bis 5 Gewichtsteilen einer Organometallverbindung, die ein Katalysator für die Kondensationsreaktion der Komponente (C) sein kann,
(E) 10 bis 200 Gewichtsteilen eines Polyorganosiloxanharzes der allgemeinen Formel (3) für die durchschnittliche Siloxaneinheit, die 0 bis 80 Mol-% Triorganosiloxaneinheiten, 0 bis 60 Mol-% Diorganosiloxanheinheiten, 0 bis 80 Mol-% Monoorganosiloxaneinheiten und 0 bis 60 Mol% SiO_{4/2}-Einheiten, die keine organische Gruppe aufweisen, umfasst, und
R³ₑSiO_{(4-e)/2} (3),
worin
R³ für gleiche oder verschiedene Alkyl- oder Alkenylgruppen mit 1 bis 12 Kohlenstoffatomen steht,
e für 0,5 bis 2,0 steht,
(F) einer katalytisch wirksamen Menge Hydrosilylierungskatalysator
besteht.

2. Silikonkautschukzusammensetzung nach Anspruch 1, wobei Komponente (E) **dadurch gekennzeichnet ist, dass** es sich um ein Polyorganosiloxanharz mit mindestens einer Alkenylgruppe handelt.

3. Silikonkautschukzusammensetzung nach Anspruch 1 oder 2, wobei das Polyorganosiloxanharz (E) **dadurch gekennzeichnet ist, dass** es aus 10 bis 80 Mol-% Triorganosiloxaneinheiten und 20 bis 90 Mol-% SiO_{4/2}-Einheiten, die keine organische Gruppe aufweisen, in allen Siloxaneinheiten besteht.

4. Silikonkautschukzusammensetzung nach einem der Ansprüche 1 bis 3, **dadurch gekennzeichnet, dass** sie (G) 0,01 bis 20 Gewichtsteile Organoalkoxysilan enthält.

## Revendications

1. Composition de caoutchouc silicone, qui est adhésive aux résines thermodurcissables, **caractérisée en ce qu'**elle comprend:
(A) 100 parties en poids d'un polyorganosiloxane comportant au moins deux motifs siloxane représentés par la formule générale (1) et ayant une viscosité de 10 à 500 000 mPa.s à 25°C,
R¹ₐR²_{b}SiO_{(4-a-b)2} (1),
dans laquelle
R¹ est un groupe alcényle,
R² est un groupe hydrocarboné monovalent substitué ou non substitué qui ne possède pas de liaison insaturée aliphatique,
a est égal à 1 ou 2,
b est égal à 0, 1 ou 2,
et la somme de a et b est égale à 1, 2 ou 3,
(B) un polyorganohydrogénosiloxane dont le motif siloxane est représenté par la formule générale (2) et qui possède au moins deux atomes d'hydrogène liés à des atomes de silicium, dont la quantité est telle que le rapport entre les atomes d'hydrogène liés à des atomes de silicium dans le constituant (B) et le groupe alcényle dans le constituant (A) est de 0,5 à 7,0,
R²_{c}H_{d}SiO_{(4-c-d)/2} (2),
dans laquelle
R² est un groupe hydrocarboné monovalent substitué ou non substitué qui ne possède pas de liaison insaturée aliphatique,
c est égal à 0, 1, 2 ou 3,
d est égal à 0, 1 ou 2,
et la somme de c et d est égale à 1, 2 ou 3,
(C) 0,01 à 10 parties en poids d'un composé organosilicié comportant un groupe hydrocarboné aromatique et un groupe alcoxy lié à un atome de silicium,
(D) 0,01 à 5 parties en poids d'un composé organométallique qui peut être un catalyseur pour la réaction de condensation du constituant (C),
(E) 10 à 200 parties en poids d'une résine de polyorganosiloxane, représentée par la formule générale (3) pour le motif siloxane moyen, qui comprend de 0 à 80 % en moles de motifs triorganosiloxane, 0 à 60 % en moles de motifs diorganosiloxane, 0 à 80 % en moles de motifs monoorganosiloxane et 0 à 60 % en moles de motifs SiO_{4/2} qui ne comportent pas de groupe organique, et
R³ₑSiO_{(4-e)/2} (3),
dans laquelle
R³ est un groupe alkyle ou alcényle identique ou différent de 1 à 12 atomes de carbone,
e est égal à 0,5 à 2,0,
(F) une quantité catalytique de catalyseur de réaction d'hydrosilylation.

2. Composition de caoutchouc silicone selon la revendication 1, dans laquelle le constituant (E) est **caractérisé en ce que** la résine de polyorganosiloxane contient au moins un groupe alcényle.

3. Composition de caoutchouc silicone selon la revendication 1 ou 2, dans laquelle la résine de polyorganosiloxane (E) est **caractérisée en ce qu'**elle est constituée de 10 à 80 % en moles de motifs triorganosiloxane et de 20 à 90 % en moles de motifs SiO_{4/2}, qui ne comportent pas de groupe organique, dans tous les motifs siloxane.

4. Composition de caoutchouc silicone selon l'une quelconque des revendications 1 à 3, qui est **caractérisée en ce qu'**elle contient de 0,01 à 20 parties en poids d'organoalcoxysilane (G).
